# EUROPEAN PATENT APPLICATION

(11) **EP 2 848 776 A2**
(43) Date of publication of application: **18.03.2015**
(21) Application number: 14184199.9
(22) Date of filing: 10.09.2014
(51) Int. Cl.: F01D 21/00, F01D 21/14

(54) **Compressor blade monitoring system**

(30) Priority: 16.09.2013 US 201314027688
(71) Applicant: General Electric Company, Schenectady, New York 12345 (US)
(72) Inventor: Yu, Lijie, Atlanta, GA Georgia 30339 (US); Ansari, Adil, Atlanta, GA Georgia 30339 (US); Badami, Vivek Venugopal, Schenectady, NY New York 12345 (US); Bliss, John Thomas, Atlanta, GA Georgia 30339 (US); Chadha, Rahul, Atlanta, GA Georgia 30339 (US); Gupta, Rajan, Atlanta, GA Georgia 30339 (US)
(74) Representative: Illingworth-Law, William Illingworth

(57) **Abstract**

A system 2 including: at least one computing device 120 configured to monitor a compressor blade 10 in a turbomachine 5 by: extracting time of arrival (TOA) data about the compressor blade 10 at a defined interval; correlating turbomachine operating conditions with the TOA data; extracting resonance data about the compressor blade 10 during startup or shutdown of the turbomachine 5, and extracting static deflection and tip clearance data about the compressor blade 10 during steady state operation of the turbomachine 5; creating a baseline compressor blade comparison level based upon the extracted resonance data, extracted static deflection and tip clearance data, and correlation between the turbomachine operating conditions and the TOA data; and iteratively extracting updated TOA data and performing the correlating, the extracting of the resonance data, static deflection and tip clearance data using the updated TOA data at the defined interval to create an updated baseline compressor blade comparison level.

Corresponding computer program product with a program code executed by such a computing device.

## Description

The subject matter disclosed herein relates to compressors. More particularly, the subject matter disclosed herein relates to monitoring components in compressors.

Compressors, such as gas turbine compressors, receive inlet air from an air source and compress that air so that it may be later combined with fuel in a combustion chamber. The gas created from combustion of the compressed air and fuel mixture is then used to force rotation of blades within the gas turbine, and correspondingly, perform mechanical work on a shaft coupled to those blades. Over time, portions of the gas turbine compressor may become damaged. Gas turbine compressor blades may become damaged, for example, by particles, foreign objects, and/or corrosive elements in the inlet air, as well as excessive high cycle and low-cycle fatigue during compressor operation. Damage to gas turbine compressor blades may cause inefficiencies in gas turbine operation and/or unwanted vibrations in the compressor. In some cases, compressor blade damage may cause liberation of one or more blades, resulting in catastrophic damage to the compressor.

Various embodiments of the invention include a system including: at least one computing device configured to monitor a compressor blade in a turbomachine system by performing actions including: extracting time of arrival (TOA) data about the compressor blade at a defined interval; correlating turbomachine operating conditions with the TOA data; extracting resonance data about the compressor blade during startup or shutdown of the turbomachine, and extracting static deflection and tip clearance data about the compressor blade during steady state operation of the turbomachine; creating a baseline compressor blade comparison level based upon the extracted resonance data, extracted static deflection and tip clearance data, and correlation between the turbomachine operating conditions and the TOA data; and iteratively extracting updated TOA data and performing the correlating, the extracting of the resonance data, static deflection and tip clearance data using the updated TOA data at the defined interval to create an updated baseline compressor blade comparison level.

A first aspect of the invention includes: a system having: at least one computing device configured to monitor a compressor blade in a turbomachine system by performing actions including: extracting time of arrival (TOA) data about the compressor blade at a defined interval; correlating turbomachine operating conditions with the TOA data; extracting resonance data about the compressor blade during startup or shutdown of the turbomachine, and extracting static deflection and tip clearance data about the compressor blade during steady state operation of the turbomachine; creating a baseline compressor blade comparison level based upon the extracted resonance data, extracted static deflection and tip clearance data, and correlation between the turbomachine operating conditions and the TOA data; and iteratively extracting updated TOA data and performing the correlating, the extracting of the resonance data, static deflection and tip clearance data using the updated TOA data at the defined interval to create an updated baseline compressor blade comparison level.

A second aspect of the invention includes a system having: a gas turbomachine including a compressor having a plurality of blades; and at least one computing device configured to monitor the compressor by performing actions including: obtaining time of arrival (TOA) data about one of the plurality of blades in the compressor at a defined interval; correlating operating conditions of the gas turbomachine with the TOA data; extracting resonance data about the one of the plurality of compressor blades during startup or shutdown of the gas turbomachine, and extracting static deflection and tip clearance data about the one of the plurality of compressor blades during steady state operation of the gas turbomachine; creating a baseline compressor blade comparison level based upon the extracted resonance data, extracted static deflection and tip clearance data, and correlation between the gas turbomachine operating conditions and the TOA data; and iteratively obtaining updated TOA data and performing the correlating, the extracting of the resonance data, static deflection and tip clearance data using the updated TOA data at the defined interval to create an updated baseline compressor blade comparison level.

A third aspect of the invention includes: a computer program product including program code, which when executed by at least one computing device, causes the at least one computing device to monitor a compressor blade in a turbomachine system by performing actions including: extracting time of arrival (TOA) data about the compressor blade at a defined interval; correlating turbomachine operating conditions with the TOA data; extracting resonance data about the compressor blade during startup or shutdown of the turbomachine, and extracting static deflection and tip clearance data about the compressor blade during steady state operation of the turbomachine; creating a baseline compressor blade comparison level based upon the extracted resonance data, extracted static deflection and tip clearance data, and correlation between the turbomachine operating conditions and the TOA data; and iteratively extracting updated TOA data and performing the correlating, the extracting of the resonance data, static deflection and tip clearance data using the updated TOA data at the defined interval to create an updated baseline compressor blade comparison level.

These and other features of this invention will be more readily understood from the following detailed description of the various aspects of the invention taken in conjunction with the accompanying drawings that depict various embodiments of the invention, in which:
FIG. 1 shows an illustrative environment including a compressor and a blade monitoring system according to various embodiments of the invention.
FIG. 2 shows a flow diagram illustrating a method performed according to various embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

As indicated above, the subject matter disclosed herein relates to compressor systems. More particularly, the subject matter disclosed herein relates to monitoring compressor systems, for example, compressor blades.

As noted herein, compressors, such as gas turbine compressors, receive inlet air from an air source and compress that air so that it may be later combined with fuel in a combustion chamber. The gas created from combustion of the compressed air and fuel mixture is then used to force rotation of blades within the gas turbine, and correspondingly, perform mechanical work on a shaft coupled to those blades. Over time, portions of the gas turbine compressor may become damaged. Gas turbine compressor blades may become damaged, for example, by particles, foreign objects, and/or corrosive elements in the inlet air, as well as excessive high cycle and low-cycle fatigue during compressor operation. Damage to gas turbine compressor blades may cause inefficiencies in gas turbine operation and/or unwanted vibrations in the compressor. In some cases, compressor blade damage may cause liberation of one or more blades, resulting in catastrophic damage to the compressor.

Various embodiments include systems, computer program products and computer-implemented methods for monitoring compressor blades to determine whether one or more blades is damaged or will likely become damaged. Conventional systems used to monitor compressor blades gather data about a compressor system (e.g., time-of-arrival (TOA) data about blades, deviations, oscillations, etc.) over a period, e.g., every two (2) hours, and send that data to a processing system that processes the data on a delayed period, e.g., every four (4) hours.

In contrast to the conventional approaches, various embodiments of the invention include systems, computer program products and computer-implemented methods that perform local processing of data about compressor blades to provide for near real-time monitoring. Various embodiments include an on-site monitoring system that extracts data about compressor blades on shortened intervals (e.g., every ten (10) minutes). Various embodiments include an on-site display system that can provide semi-real-time data about the condition of one or more compressor blades.

The system according to various embodiments can be configured to continuously extract and process blade TOA data on-site during both transient and steady-state operation of the compressor. In some embodiments, the system(s) can automatically determine baseline blade health statistics for use in comparing with later-obtained data about compressor blades. Additionally, the system(s) can normalize blade health statistics to allow for threshold-based detection of anomalies.

In the following description, reference is made to the accompanying drawings that form a part thereof, and in which is shown by way of illustration specific example embodiments in which the present teachings may be practiced. These embodiments are described in sufficient detail to enable those skilled in the art to practice the present teachings and it is to be understood that other embodiments may be utilized and that changes may be made without departing from the scope of the present teachings. The following description is, therefore, merely exemplary.

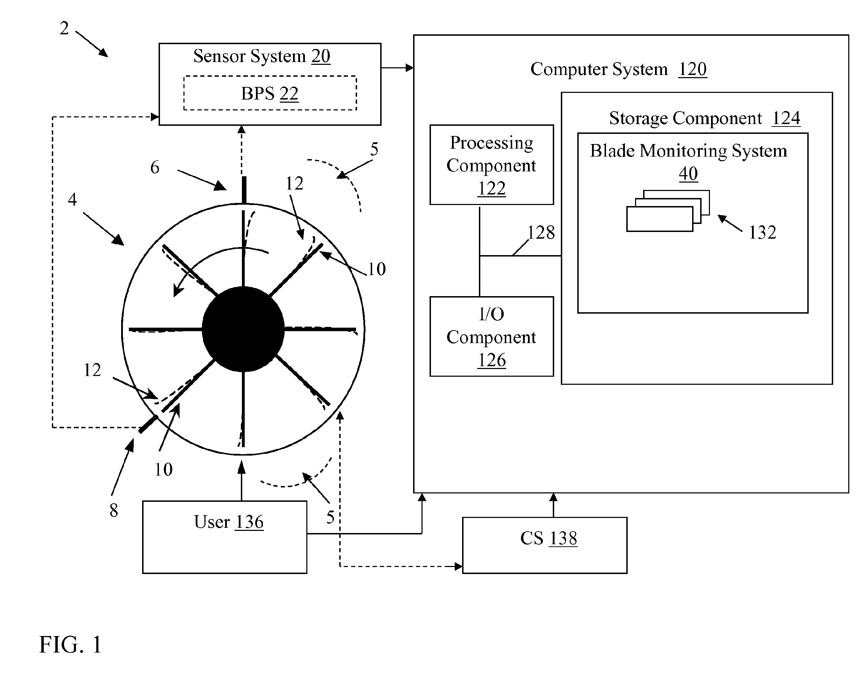

FIG. 1 shows an illustrative schematic environment 2 including a compressor (e.g., a gas turbine compressor) 4 and a blade monitoring system 40 according to various embodiments of the invention. Compressor 4 is coupled with a turbomachine 5 (e.g., a gas turbomachine), and as is known in the art, the compressor 4 can provide compressed air to the turbomachine 5 for use in generating a combustion gas to drive turbine blades in that turbomachine 5. The turbomachine 5 is illustrated with phantom arcs indicating that one or more portions of the compressor 4 may be contained within the turbomachine 5. Compressor 4 is shown including a plurality of compressor blades (or simply, blades) 10 in motion during operation of compressor 4 (operation illustrated by counter-clockwise arrow). The nominal position of each blade is indicated by the numeral 10, while each blade's actual position during operation of compressor 4 is indicated by the numeral 12 (or, "deflection position"). The nominal position 10 is predefined based upon the geometry of compressor (e.g., gas turbine compressor) 4 and its rate of speed and load during operation. The actual position 12 is measured, e.g., by one or more sensors, as is described further herein. As used herein, blades will be referenced by the numeral 10. Further shown in FIG. 1 is a sensor system 20, operatively connected to compressor 4 by conventional (e.g., wireless or hard-wired) means. Sensor system 20 may be linked to (e.g., via wireless or hard-wired means), or include, a first sensor 6 and/or a second sensor 8. First sensor 6 and second sensor 8 may aid in determining an actual (or, deflection) position 12 of a compressor blade 10 during operation of compressor 4. It is understood that first sensor 6 and second sensor 8 are merely illustrative of one configuration of sensor(s) capable of working in conjunction with embodiments of the invention. For example, in one embodiment, only a single sensor (e.g., sensor 6 or sensor 8) may be used to determine and actual (deflection) position 12 of compressor blade 10 during operation of compressor 4.

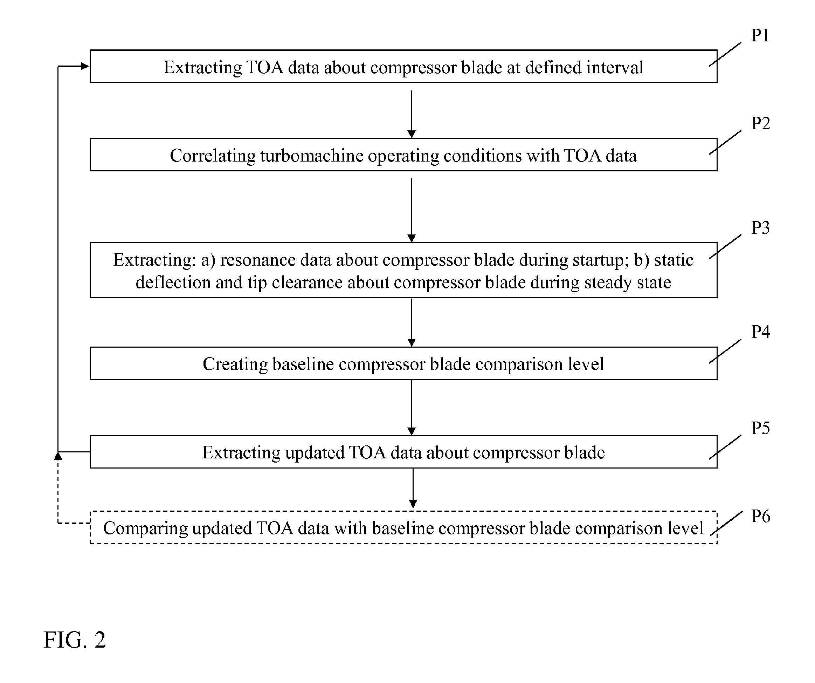

With continuing reference to FIG, 1, and with further reference to the process flow diagram of FIG. 2, processes of monitoring a compressor blade (e.g., a gas turbomachine compressor blade 10) according to various embodiments of the invention are illustrated. One or more of these processes can be performed, e.g., by at least one computing device, such as computer system 120, as described herein. In other cases, one or more of these processes can be performed according to a computer-implemented method. In still other embodiments, one or more of these processes can be performed by executing computer program code (e.g., blade monitoring system 40) on at least one computing device (e.g., computer system 120), causing the at least one computing device to perform a process, e.g., monitoring. In general, the process can include the following sub-processes:

Process P1: extracting time of arrival (TOA) data about a compressor blade 10 (e.g., from a data store, sensor system 20, etc.) at a defined interval. In some cases, the defined interval is approximately the defined interval is less than approximately 10 minutes. As described herein, performing this extraction at such short intervals allows for near-real-time monitoring of the condition of blades 10.

In various embodiments, the TOA data about the compressor blade 10 can be extracted from stored or near real-time data about the compressor blade 10, for example, blade passing signal data. With reference to FIG. 1, while the blades 10 rotate within compressor 4, sensor system 20 senses a blade passing signal (BPS) 22 for each blade 10 as it passes under a sensor. For example, one or more sensors (e.g., first sensor 6 and/or second sensor 8) may be configured to sense the passing of a blade using one or more of a laser probe, a magnetic sensor, a capacitive sensor, a microwave sensor, or an eddy current sensor. However, sensors may be configured to sense BPS 22 via any techniques known in the art. In any case, sensor system 20 may be linked to or include one or more sensors (e.g., first sensor 6 and/or second sensor 8) which may sense a BPS 22 for a passing blade 10.

After obtaining BPS 22, the sensor system 20 may transmit BPS 22 to the computer system 120 (e.g., via wireless or hard-wired means), store it in local memory (storage component 124) and/or external memory (not shown), or transmit it to an intermediate system where it is capable of being obtained by the blade monitoring system (e.g., blade monitoring system 40). Computer system 120 is shown in communication with sensor system 20, which may store BPS 22 and/or transmit BPS 22 to computer system 120. Further, computer system 120 is shown in communication with a user 136. A user 136 may be, for example, a programmer or operator. Additionally, computer system 120 is shown in communication with a control system (CS) 138. CS 138 may be, for example, a computerized control system for controlling operation of gas turbine compressor 4. Interactions between these components and computer system 120 will be discussed elsewhere in this application. Computer system 120 is shown including a processing component 122 (e.g., one or more processors), a storage component 124 (e.g., a storage hierarchy), an input/output (I/O) component 126 (e.g., one or more I/O interfaces and/or devices), and a communications pathway 128. In one embodiment, processing component 122 executes program code, such as blade monitoring system 40, which is at least partially embodied in storage component 124. While executing program code, processing component 122 can process data, which can result in reading and/or writing the data to/from storage component 124 and/or I/O component 126 for further processing. Pathway 128 provides a communications link between each of the components in computer system 120. I/O component 126 can comprise one or more human I/O devices or storage devices, which enable user 136 and/or CS 138 to interact with computer system 120 and/or one or more communications devices to enable user 136 and/or CS 138 to communicate with computer system 120 using any type of communications link. To this extent, blade monitoring system 40 can manage a set of interfaces (e.g., graphical user interface(s), application program interface, and/or the like) that enable human and/or system interaction with blade monitoring system 40.

In any event, computer system 120 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, blade monitoring system 40 can be embodied as any combination of system software and/or application software. In any event, the technical effect of computer system 120 is to determine whether one or more blade(s) 10 is damaged.

Further, blade monitoring system 40 can be implemented using a set of modules 132. In this case, a module 132 can enable computer system 20 to perform a set of tasks used by blade monitoring system 40, and can be separately developed and/or implemented apart from other portions of blade monitoring system 40. Blade monitoring system 40 may include modules 132 which comprise a specific use machine/hardware and/or software. Regardless, it is understood that two or more modules, and/or systems may share some/all of their respective hardware and/or software. Further, it is understood that some of the functionality discussed herein may not be implemented or additional functionality may be included as part of computer system 120.

When computer system 120 comprises multiple computing devices, each computing device may have only a portion of blade monitoring system 40 embodied thereon (e.g., one or more modules 132). However, it is understood that computer system 120 and blade monitoring system 40 are only representative of various possible equivalent computer systems that may perform a process described herein. To this extent, in other embodiments, the functionality provided by computer system 120 and blade monitoring system 40 can be at least partially implemented by one or more computing devices that include any combination of general and/or specific purpose hardware with or without program code. In each embodiment, the hardware and program code, if included, can be created using standard engineering and programming techniques, respectively.

Regardless, when computer system 120 includes multiple computing devices, the computing devices can communicate over any type of communications link. Further, while performing a process described herein, computer system 120 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

As discussed herein, blade monitoring system 40 enables computer system 120 to determine whether one or more blades 10 is damaged. Blade monitoring system 40 may include logic for performing one or more actions described herein. In one embodiment, blade monitoring system 40 may include logic to perform the above-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, blade monitoring system 40 and logic included therein will be described herein as a specific use machine. As will be understood from the description, while logic is illustrated as including each of the above-stated functions, not all of the functions are necessary according to the teachings of the invention as recited in the appended claims.

With continuing reference to FIGS. 1-2, during operation, the sensor system 20 and the blade monitoring system 40 may work together to monitor one or more blades 10 and determine whether the one or more blades 10 is damaged. In one embodiment, sensor system 20 may provide BPS 22 to the blade monitoring system 40. In another embodiment, as described herein, the blade monitoring system 40 may obtain BPS 22 from a source other than sensor system 20 (e.g., via a storage system or intermediate system/device). In any case, the blade monitoring system 40 may obtain the BPS 22 and/or extract a time-of-arrival (TOA) signal (TOA data) from the BPS 22 (FIG. 1, process P2). The TOA signal may indicate a time of arrival of compressor blade 10. For example, the time of arrival of a compressor blade 10 may be measured by timing how long it takes a blade 10 to pass under a sensor (e.g., first sensor 6 or second sensor 8) with reference to a once/revolution (1/rev) marker, as is known in the art.

In another example, the time of arrival of a blade 10 may be measured by timing how long it takes that blade 10 to travel from a first sensor (e.g., first sensor 6) to a second sensor (e.g., second sensor 8). The TOA signal may be extracted by the blade monitoring system 40 via, for example, an edge threshold approach, a centroid approach, or other conventional signal processing approaches. In any case, blade monitoring system 40 obtain BPS 22 and extracts the TOA signal (FIG. 1, process P1).

In various embodiments, control system 138 and/or sensor system 20 may be configured to monitor e.g., gas turbine operating parameters (e.g., operating conditions of gas turbine compressor 4 or other components in a gas turbine system). In one embodiment, blade monitoring system 40 can access load information and inlet guide vane (IGV) position/angle information from a turbine control system (e.g., control system 138) whenever the load change occurs.

Returning to FIG. 2, following process P1, process P2 can include: correlating turbomachine operating conditions with the TOA data. Turbomachine operating conditions (conditions of the turbomachine 5) at a given time can be determined based on control system logic (e.g., logic conditions in CS 138). If the turbomachine 5 coupled to the compressor 4 has been operating continuously at steady state since the previous processing time interval, TOA data can be extracted and processed immediately. However, if there was a restart or shutdown event since the last extraction, a few minutes delay can be introduced to allow the transient period to complete before TOA extraction is performed, such that a speed varying segment of transient TOA data can be grouped together for later resonance frequency estimation. Following process P2, process P3 can include: extracting resonance data about the compressor blade 10 during startup or shutdown of the turbomachine, and extracting static deflection and tip clearance data about the compressor blade during steady state operation of the turbomachine. In various embodiments, this can further include evaluating extracted TOA data, event data (e.g., shutdown schedule) and/or transient/steady state data from the sensor system 20 and/or storage component 124. During a load change (e.g., startup, shutdown, change from one steady state to another) on compressor 4 (e.g., a gas turbine compressor), blades 10 may exhibit ringing or vibration, as is typically seen in the response of underdamped systems to an input disturbance. The TOA deviation signal of one or more blade(s) 10 during a load change on compressor 4 will exhibit a measurable change in magnitude (representing oscillation of the blade(s) 10 during the load change). In some embodiments, the exact magnitude of the forcing function is not known in general, and in this case, the oscillation of blade(s) (e.g., blade(s) 10) may be normalized for a standard load/IGV angle shift. These normalized features of the blades (e.g., blades 10), such as rise time, natural frequency, damping factor and settling time may be estimated, using known system identification techniques. The normalized features may then be compared with features taken from the dynamic component of the TOA deviation signal, as described further herein.

Process P4 can include: creating a baseline compressor blade comparison level based upon the extracted resonance data, extracted static deflection and tip clearance data, and correlation between the turbomachine operating conditions and the TOA data. The resonance baseline can be established using statistics gathered from a number of historical transient events (e.g., previously occurring transient events). Static deflection and clearance baseline data can also be established statistically using an initial feature dataset.

Process P5 can include: iteratively extracting updated TOA data and performing the correlating, the extracting of the resonance data, static deflection and tip clearance data using the updated TOA data at the defined interval to create an updated baseline compressor blade comparison level. That is, the above-described processes (P1-P4) can be iterated according to the defined interval, e.g., approximately every 10 minutes, to provide near-real-time monitoring of compressor blades 10. Additionally, the process can allow for modifying the baseline compressor blade comparison level in short intervals.

The process can further include (optionally), process P6: comparing the updated TOA data about the compressor blade with the baseline compressor blade comparison level, e.g., to determine whether the update TOA data indicates an anomaly.

In various embodiments, Processes P1-P6 can be iterated (repeated) periodically (e.g., according to schedule of x times per y period, and/or continuously) in order to monitor one or more compressor blades 6. In some cases, processes P1-P6 can be repeated, for example, for a set of compressor blades 6.

It is understood that in the flow diagram shown and described herein, other processes may be performed while not being shown, and the order of processes can be rearranged according to various embodiments. Additionally, intermediate processes may be performed between one or more described processes. The flow of processes shown and described herein is not to be construed as limiting of the various embodiments.

In any case, the technical effect of the various embodiments of the invention, including, e.g., the blade monitoring system 40, is to monitor a component (e.g., a blade 10) in a turbomachine compressor (e.g., turbomachine compressor 4 and/or other compressors known in the art).

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., fastening, ultrasonic welding, bonding).

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   at least one computing device configured to monitor a compressor blade in a turbomachine by performing actions including:
      extracting time of arrival (TOA) data about the compressor blade at a defined interval;
      correlating turbomachine operating conditions with the TOA data;
      extracting resonance data about the compressor blade during startup or shutdown of the turbomachine, and extracting static deflection and tip clearance data about the compressor blade during steady state operation of the turbomachine;
      creating a baseline compressor blade comparison level based upon the extracted resonance data, extracted static deflection and tip clearance data, and correlation between the turbomachine operating conditions and the TOA data; and
      iteratively extracting updated TOA data and performing the correlating, the extracting of the resonance data, static deflection and tip clearance data using the updated TOA data at the defined interval to create an updated baseline compressor blade comparison level.
2. The system of clause 1, wherein the at least one computing device is further configured to compare the updated TOA data about the compressor blade with the baseline compressor blade comparison level.
3. The system of any preceding clause, wherein the at least one computing device is further configured to obtain the turbomachine operating conditions from a sensor system coupled with the turbomachine.
4. The system of any preceding clause, wherein the defined interval is less than approximately 10 minutes.
5. The system of any preceding clause, wherein the turbomachine includes a gas turbine.
6. The system of any preceding clause, further comprising a sensor system coupled to the at least one computing device, the sensor system for sensing a blade passing signal (BPS) of the compressor blade, wherein the sensor system senses the blade passing signal using at least one of optical sensing, capacitive sensing, microwave sensing or eddy current sensing.
7. The system of any preceding clause, wherein the TOA data is extracted from the BPS using one of an edge threshold extraction or a centroid extraction.
8. A system comprising:
   a gas turbomachine including a compressor having a plurality of blades; and
   at least one computing device configured to monitor the compressor by performing actions including:
      obtaining time of arrival (TOA) data about one of the plurality of blades in the compressor at a defined interval;
      correlating operating conditions of the gas turbomachine with the TOA data;
      extracting resonance data about the one of the plurality of compressor blades during startup or shutdown of the gas turbomachine, and extracting static deflection and tip clearance data about the one of the plurality of compressor blades during steady state operation of the gas turbomachine;
      creating a baseline compressor blade comparison level based upon the extracted resonance data, extracted static deflection and tip clearance data, and correlation between the gas turbomachine operating conditions and the TOA data; and
      iteratively obtaining updated TOA data and performing the correlating, the extracting of the resonance data, static deflection and tip clearance data using the updated TOA data at the defined interval to create an updated baseline compressor blade comparison level.
9. The system of any preceding clause, wherein the at least one computing device is further configured to compare the updated TOA data about the one of the plurality of compressor blades with the baseline compressor blade comparison level.
10. The system of any preceding clause, further comprising a sensor system coupled to the gas turbomachine, wherein the at least one computing device is further configured to obtain the gas turbomachine operating conditions from the sensor system.
11. The system of any preceding clause, wherein the defined interval is less than approximately 10 minutes.
12. The system of any preceding clause, further comprising a sensor system coupled to the at least one computing device, the sensor system for sensing a blade passing signal (BPS) of the one of the plurality of compressor blades.
13. The system of any preceding clause, wherein the sensor system senses the blade passing signal using at least one of optical sensing, capacitive sensing, microwave sensing or eddy current sensing.
14. The system of any preceding clause, wherein the TOA data is extracted from the BPS using one of an edge threshold extraction or a centroid extraction.
15. A computer program product comprising program code, which when executed by at least one computing device, causes the at least one computing device to monitor a compressor blade in a turbomachine by performing actions including:
   extracting time of arrival (TOA) data about the compressor blade at a defined interval;
   correlating turbomachine operating conditions with the TOA data;
   extracting resonance data about the compressor blade during startup or shutdown of the turbomachine, and extracting static deflection and tip clearance data about the compressor blade during steady state operation of the turbomachine;
   creating a baseline compressor blade comparison level based upon the extracted resonance data, extracted static deflection and tip clearance data, and correlation between the turbomachine operating conditions and the TOA data; and
   iteratively extracting updated TOA data and performing the correlating, the extracting of the resonance data, static deflection and tip clearance data using the updated TOA data at the defined interval to create an updated baseline compressor blade comparison level.
16. The computer program product of any preceding clause, wherein the program code causes the at least one computing device to further compare the updated TOA data about the compressor blade with the baseline compressor blade comparison level.
17. The computer program product of any preceding clause, wherein the program code causes the at least one computing device to further obtain the turbomachine operating conditions from a sensor system coupled with the turbomachine.
18. The computer program product of any preceding clause, wherein the defined interval is less than approximately 10 minutes.
19. The computer program product of any preceding clause, wherein the TOA data is extracted from a blade passing signal (BPS) of the compressor blade.
20. The computer program product of any preceding clause, wherein the TOA data is extracted from the BPS using one of an edge threshold extraction or a centroid extraction.

## Claims

1. A system (2) comprising:
at least one computing device (120) configured to monitor a compressor blade (10) in a turbomachine (5) by performing actions including:
extracting time of arrival (TOA) data about the compressor blade (10) at a defined interval;
correlating turbomachine operating conditions with the TOA data;
extracting resonance data about the compressor blade (10) during startup or shutdown of the turbomachine (5), and extracting static deflection and tip clearance data about the compressor blade (10) during steady state operation of the turbomachine;
creating a baseline compressor blade comparison level based upon the extracted resonance data, extracted static deflection and tip clearance data, and correlation between the turbomachine operating conditions and the TOA data; and
iteratively extracting updated TOA data and performing the correlating, the extracting of the resonance data, static deflection and tip clearance data using the updated TOA data at the defined interval to create an updated baseline compressor blade comparison level.

2. The system of claim 1, wherein the at least one computing device (120) is further configured to obtain the turbomachine operating conditions from a sensor system (20) coupled with the turbomachine (5).

3. The system of claim 1 or claim 2, wherein the turbomachine includes a gas turbine (5).

4. A system (2) comprising:
a gas turbomachine (5) including a compressor (4) having a plurality of blades (10); and
at least one computing device (120) configured to monitor the compressor (4) by performing actions including:
obtaining time of arrival (TOA) data about one of the plurality of blades (10) in the compressor (4) at a defined interval;
correlating operating conditions of the gas turbomachine (5) with the TOA data;
extracting resonance data about the one of the plurality of compressor blades (10) during startup or shutdown of the gas turbomachine (5), and extracting static deflection and tip clearance data about the one of the plurality of compressor blades (10) during steady state operation of the gas turbomachine (5);
creating a baseline compressor blade comparison level based upon the extracted resonance data, extracted static deflection and tip clearance data, and correlation between the gas turbomachine operating conditions and the TOA data; and
iteratively obtaining updated TOA data and performing the correlating, the extracting of the resonance data, static deflection and tip clearance data using the updated TOA data at the defined interval to create an updated baseline compressor blade comparison level.

5. The system of claim 4, further comprising a sensor system (20) coupled to the gas turbomachine (5), wherein the at least one computing device (120) is further configured to obtain the gas turbomachine operating conditions from the sensor system (20).

6. The system of any preceding claim, wherein the at least one computing device (120) is further configured to compare the updated TOA data about the compressor blade (10) with the baseline compressor blade comparison level.

7. The system of any preceding claim, wherein the defined interval is less than approximately 10 minutes.

8. The system of any preceding claim, comprising a sensor system (20) coupled to the at least one computing device (120), the sensor system (20) for sensing a blade passing signal (BPS) of the one of the plurality of compressor blades (10).

9. The system of claim 8, wherein the sensor system (20) senses the blade passing signal using at least one of optical sensing, capacitive sensing, microwave sensing or eddy current sensing.

10. The system of claim 9, wherein the TOA data is extracted from the BPS using one of an edge threshold extraction or a centroid extraction.

11. A computer program product comprising program code, which when executed by at least one computing device, causes the at least one computing device to monitor a compressor blade in a turbomachine by performing actions including:
extracting time of arrival (TOA) data about the compressor blade at a defined interval;
correlating turbomachine operating conditions with the TOA data;
extracting resonance data about the compressor blade during startup or shutdown of the turbomachine, and extracting static deflection and tip clearance data about the compressor blade during steady state operation of the turbomachine;
creating a baseline compressor blade comparison level based upon the extracted resonance data, extracted static deflection and tip clearance data, and correlation between the turbomachine operating conditions and the TOA data; and
iteratively extracting updated TOA data and performing the correlating, the extracting of the resonance data, static deflection and tip clearance data using the updated TOA data at the defined interval to create an updated baseline compressor blade comparison level.

12. The computer program product of claim 11, wherein the program code causes the at least one computing device to further compare the updated TOA data about the compressor blade with the baseline compressor blade comparison level.

13. The computer program product of claim 11 or claim 12, wherein the program code causes the at least one computing device to further obtain the turbomachine operating conditions from a sensor system coupled with the turbomachine.

14. The computer program product of claim 11, 12 or 13, wherein the defined interval is less than approximately 10 minutes.

15. The computer program product of any one of claims 11 to 14, wherein the TOA data is extracted from a blade passing signal (BPS) of the compressor blade, preferably using one of an edge threshold extraction or a centroid extraction.
